# EUROPEAN PATENT APPLICATION

(11) **EP 1 394 776 A1**
(43) Date of publication of application: **03.03.2004**
(21) Application number: 03255431.3
(22) Date of filing: 29.08.2003
(51) Int. Cl.: G11B 5/48

(54) **Method of manufacture and apparatus for a pivot assembly**

(30) Priority: 29.08.2002 JP 2002250455
(71) Applicant: Minebea Co., Ltd., Nagano-Ken 389-0293 (JP)
(72) Inventor: Mori,Yasuhiro c/o Minebea Co.. 4106-73 Oaza-Miyota, Nagano-ken 389-0293 (JP)
(74) Representative: Wilson Gunn Gee

(57) **Abstract**

An apparatus to supply a pivot assembly manufacturing method that can reliably fix a hub cap and, in addition, can solve the problem of out gas also, and can reduce the expense and man-days incidental to the pre-load of a ball bearing. Ball bearings 2 are mated to both ends of a shaft 1, and in the outer circumferences of these ball bearings 2 a spacer 31 mated a sleeve 3 disposed between both ball bearings 2, and to the inner circumference of the upper end part of the shaft 1 a hub cap 4 that blocks the outside end face of the ball bearings 2 is fixed by laser welding.

## Description

The present invention relates to a manufacturing method and a manufacturing device for a pivot assembly used as the bearing of a swing arm system actuator in a hard disk drive, and more particularly to technology that restrains the generation of out gas and, in addition, simplifies the work that applies a pre-load to a ball bearing.

As the above-mentioned kind of pivot assembly, for example, one in which ball bearings are fixed to both end parts of a shaft having a flange on the end parts, and the intervals of both of these ball bearings are held by a spacer or sleeve, and in addition, a hub cap is fixed on the outside of the other end of the shaft, are known. Here, the hub cap is something provided so that the gas and dirt generated from the grease and the like provided to the ball bearings will not be discharged and so, formerly, has been fixed to the shaft by bonding.

However, in the above-mentioned conventional pivot assembly there was the problem that gas was discharged from the adhesive that fixes the hub cap to the shaft and brought about a harmful effect on the surface of the hard disk and magnetic head. In order to solve this kind of out gas problem, pressing and fixing a hub cap onto a shaft has also been carried out. However, with fixing by means of pressing in, control of the allowance for pressing in is difficult and there is the problem that there is a lack of reliability of the fixing of the hub cap. Furthermore, pressing in and bonding and reliably fixing a hub cap to a shaft has been carried out, but in this case the problem of out gas from the adhesive remains as before.

Furthermore, in the conventional pivot assembly the ball bearing and shaft and sleeve were fixed by means of an adhesive. In this case, before all the inner rings and outer rings are completely bonded, applying pre-load to the ball bearings and eliminating play is carried out. As for this pre-load, a pivot assembly is attached to a jig, and by means of the spring strength of the jig or the weight of a weight, the inner ring of the ball bearing of one side is pressed to the side of the other ball bearing, and is applied so as to eliminate the axial internal clearance that exists between the inner and outer rings and balls. For this reason, at the inner ring of the ball bearing of the side that has been pressed, that adhesive is regarded as in an unhardened state so as to be able to move in the axial direction. And the pivot assembly is heated in a heating furnace in the state in which a pre-load has been given to a ball bearing by a jig, and the unhardened state adhesive is completely hardened.

In this way, with the conventional pivot assembly, because the pivot assembly must be carried into a heating furnace in the state of being attached to a jig in order to fix the pre-load applied state in a ball bearing, a large quantity of jigs are required, and moreover, jigs must be made of a material that is heat resistant.

For this reason, there was not just the problem that, because of the expense of the jigs, the manufacturing cost of a pivot assembly became comparatively high, but the work of the attachment and removal of jigs to and from the pivot assemblies becomes necessary and the number of man-days of work increases. Furthermore, even if a UV hardness adhesive is used as a bonding agent, only the necessity to make the jigs heat resistant is eliminated and a problem approximately equal to the above-mentioned remains.

Consequently, the present invention aims to provide a manufacturing method and manufacturing device for a pivot assembly which can reliably fix a hub cap and, in addition, can solve the problem of out gas, of course, and can reduce the expense and man-days incidental to the pre-loading of a ball bearing.

The invention provides an apparatus according to Claim 1 and methods according to Claims 3 and 6.

The present invention is further directed to a pivot assembly manufacturing method characterised in that, in the manufacturing method of a pivot assembly for hard disk drive use in which ball bearings are mated with both ends of a shaft, and on the outer circumference of these ball bearings, an inner wall part mates a sleeve disposed between both said ball bearings, and at, at least, one end part of the shaft, a seal member that covers the outer end face of the ball bearing has been fixed, by pressing pressure on the seal member a pre-load is imparted to the outer ring of the ball bearing, and in that state the seal member is fixed by laser welding to the outer circumference of the shaft.

In the manufacturing method of the above-mentioned pivot assembly for hard disk drive use (hereinafter, called simply, "pivot assembly"), because the seal member is fixed by laser welding to the outer circumference of the shaft, the seal member can be reliably fixed, and the problem of out gas from the seal member can be solved. Furthermore, the seal member is pressed and pre-load is imparted to the inner ring or the outer ring, and in that state the seal member is laser welded to the shaft; thus, as in the above-mentioned prior art, a jig is not necessary in order to harden an adhesive in a heating furnace or the like,.

Consequently, the expense of manufacturing jigs and the work that attaches and removes jigs with respect to the pivot assemblies becomes unnecessary. Furthermore, since the pre-load setting that formerly was carried out by a process of bonding and the like the outer ring to the shaft can be omitted due to the fixing of the seal member, manufacturing man-days are further reduced and the manufacturing expense can be greatly decreased.

In the above-mentioned kind of manufacturing method the inner ring is not fixed to the shaft by an adhesive, and before the pre-load work another inner ring and outer ring can be fixed to a shaft and sleeve by bonding. Furthermore, the inner ring that imparts a pre-load can also be fixed to a shaft by an adhesive. In this case, after the seal member is laser welded and pre-load has been set, the pivot assembly is carried in to the heating furnace and the ultraviolet ray irradiation equipment and the adhesive hardens. Consequently, an adhesive that fixes another inner ring and outer ring also simultaneously hardens at the same time. Furthermore, fixing an inner ring, other than the inner ring that presses at the time of setting the pre-load, and an outer ring to a shaft and sleeve by pressing in can also be done.

The above-mentioned pivot assembly manufacturing method is one in which the present invention has been applied in an example that has mated a sleeve to the outer circumference of a ball bearing, but the present invention can also be applied in one in which a spacer has been disposed between both outer rings of ball bearings. In this case also a seal member is fixed by laser welding to the outer circumference of a shaft, and by means of this an action and effect equal to the above-mentioned pivot assembly can be completed.

Furthermore, in a pivot assembly that has mated a sleeve to the outer circumference of a ball bearing, a seal member can be fixed by laser welding to the inner circumference of the sleeve. In this case, pre-load can be applied by pressing the upper outer ring, and the fixing of the outer ring and inner ring can be carried out in the same way as the above.

There is no limit on the laser welding laser source, for example, a YAG laser can be used. Furthermore, laser welding can be carried out over the entire circumference of the contact part of the seal part with the shaft or sleeve (seam welding), or can be carried out in multiple mutually separated places along the contact part (spot welding). in addition, with the present invention a seal member is provided at one end side of a shaft, at the other end part of a shaft a flange is formed, and the discharge of dirt and the like from the inner part can be suppressed. Or, a seal member can also be provided at both end part sides of a shaft and, in this case, the machining of the shaft is limited and it is advantageous from the standpoint of manufacturing costs.

Now, the present invention is a pivot assembly for hard disk drive use; accordingly, the laser welded seal member is a rather thin member of a thickness of 0.3 - 1.5 mm. For this reason, because with spot welding by means of electric resistance welding and gas welding the welding part reaches the inner ring and outer ring of the ball bearing and bearing precision is lowered by that thermal effect, they were not used. With the present invention, because the seal member is welded to the shaft and sleeve by laser welding, by narrowing down the spot diameter of the laser beam to approximately 0.4 mm, for example, the depth of the welded part can be made approximately 0.2 mm. By this means, the welded part does not reach the inner ring and the like and a lowering of the bearing precision can be prevented.

Furthermore, because the laser beam spot is narrowed down as mentioned above and welding is carried out, when a gap exists between the shaft or sleeve and the seal member, both are not welded normally and a welding failure occurs. Consequently, in order to make it so that a gap does not occur between the two, it is desirable that the fit relationship of the seat [sic: seal] member with the shaft or sleeve be one that is slightly squeezed in (loosely pressed in). However, even if both are squeezed in, this does not mean that a gap and concave part is formed in the part that is irradiated by the laser beam. For example, when a chamfer is formed on the inner circumferential edge of the seal member, a concave part is formed between that chamfer and the outer circumference of the shaft, and when a laser beam is irradiated there a welding failure occurs. That is, because a part equivalent to the width dimension of the concave part that corresponds to the laser spot diameter is a space while originally being a part that should be welded, as a whole, the welding part is reduced. Because the laser energy increases and the weld depth becomes deeper when the laser spot diameter is made larger as a countermeasure thereto, the weld part reaches to the inner ring or the outer ring. As a result, deformation and the like of the formed part occur and become a cause of a decrease in bearing performance.

The present invention, including its features and advantages, will become more apparent from the following detailed description with reference to the accompanying drawings.

### BRIEF DESCRIPTION OF THE DRAWINGS

Figure 1 is a side cross-section view that shows the pivot assembly of the first embodiment of the present invention.
Figure 2 is an enlarged side cross-section view of a welded part.
Figure 3 is the Figure 1 arrow III direction view.
Figure 4 is a view that shows a modified example of Figure 3.
Figure 5 is a side cross-section view that shows the pre-load setting device of the first embodiment of the present invention.
Figure 6 is the Figure 5 VI-VI line cross-section view.
Figure 7 is a side cross-section view that shows the pivot assembly of the second embodiment of the present invention.
Figure 8 is a side cross-section view that shows the pivot assembly of the third embodiment of the present invention.
Figure 9 is an enlarged side cross-section view of a welded part.
Figure 10 is the Figure 8 arrow X-X direction view.
Figure 11 is a view that shows a modified example of Figure 10.

### DETAILED DESCRIPTION

Accordingly, in the present invention, forming a sharp edge on the edge part of the seal member, and closely sticking this sharp edge to the outer circumference of a shaft or the inner circumference of a sleeve, and fixing by means of laser welding at that part is regarded as a suitable mode.

Here, the sharp edge in the present invention means the case in which the radius is 0.1 mm or less when the cross-section of the edge part has been made a circular arc shape, and when the seal member is machined by turning and grinding, means the state of the edge part with the outer circumference or inner circumference machined and left as is. In short, whether or not the two surfaces that form a sharp edge are at a sharp angle is not a problem.

Due to a reason the same as the above-mentioned, when a seal member is formed by means of press blanking, it is desirable that the edge part of the surface facing the direction of that press blanking be fastened by laser welding to the outer circumference of the shaft or the inner circumference of the sleeve. That is, when a seal member is stamped by a punch and die, at the surface of the side where the punch penetrates, the thickness of the edge part is brought into the inside and a chamfer of the circular arc shape is formed, but at the side punched out by the punch, on the contrary, thickness die wear or burrs occur and the edge part sticks out. Consequently, by placing that kind of protruding part on the weld side, a gap and concave part between the seal member and shaft or sleeve does not occur, and the laser beam is properly irradiated. Furthermore, since a protruding part formed due to die wear or burrs is fused, the protruding part welded by the laser beam is fixed like built-up welding and can weld more securely.

Next, the present invention is a pivot assembly pre-load setting device that sets the pre-load in a bearing assembly having ball bearings mated to both end parts of a shaft, and a seal member that covers the outer end face of a ball bearing disposed at one end part of the shaft, characterized in that a support means that supports the bearing assembly, and pressing pressure member that applies a pre-load to the inner ring or outer ring of a ball bearing by pressing on the seal member, and a welding means that laser welds to the outer circumference of a shaft or to the inner circumference of a sleeve mated to the outer circumference of a ball bearing, a seal member, in the state of having had pre-load applied, are provided.

In the pivot assembly pre-load setting device of the above-mentioned constitution, since the imparting of a pre-load and fixing can be carried out by the cooperative action of the pressing pressure member and the welding means, the manufacture of a jig and the attachment and removal work become unnecessary, and, in addition, the step of the bonding and the like of the inner ring for the purpose of the setting of the pre-load can be omitted.

Here, if, to the pressing pressure member, multiple grooves extending in the axial direction from the surface of the seal member are provided separated from each other in a circumferential direction, it is acceptable. By configuring in this way, the welding means can irradiate a laser beam to the inner edge part of the seal member through the grooves and weld.

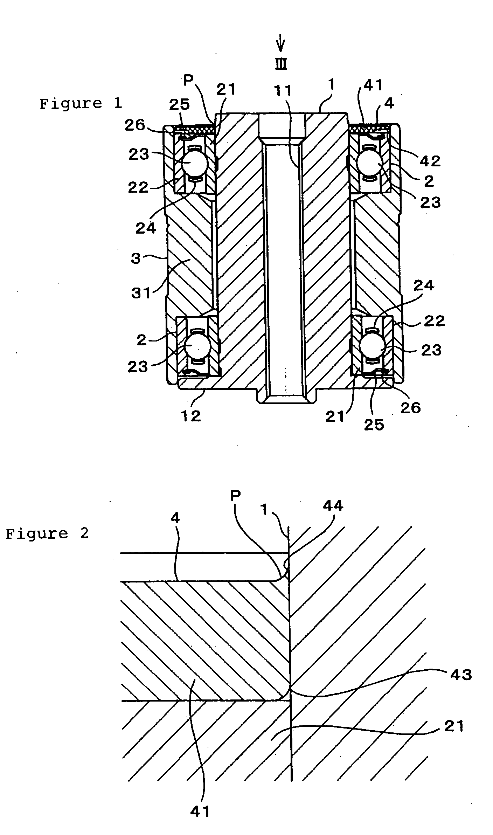

The first embodiment of the present invention is explained with reference to Figure 1 through Figure 4. In these figures reference numeral 1 is a shaft. A screw hole 11 is formed in the center of the shaft 1 and the pivot assembly is attached to the hard disk drive by a bolt screwed together at this screw hole 11. At the lower edge part of the shaft 1 a flange 12 is formed. On the outer circumference of the shaft 1 a ball bearing 2 caused to contact the end face is mated with the flange 12.

The ball bearing 2 is provided with an inner ring 21 and an outer ring 22 and multiple balls 23 that can roll in a circumferential direction between them. The balls 23 are held at regular intervals in a circumferential direction by a retainer 24. The opening part facing the flange 12 side between the inner ring 21 and the outer ring 22 is blocked by a seal 25. Furthermore, reference numeral 26 in the figure is a snap ring in order to fix the seal 25.

Also at the top end part of the shaft 1 ball bearings 2 the same as the above-mentioned are pressed in. And at the outer circumference of these two ball bearings 2 a sleeve 3 has been mated. In the center part in the axial direction of the sleeve 3, a spacer part (inner wall part) 31 with an inner diameter even smaller than both end parts is formed. At both end faces of the spacer part 31 the outer rings 22 of the ball bearings 2 make contact, and by means of this the outer rings 22 are separated from each other by a set interval. At the upper end part of the shaft 1 a hub cap (seal member) 4 is fixed. The hub cap 4 forms a ring shape and is composed of an inner circumference part 41 and an outer circumference part 42 that is thinner than this inner circumference part 41.

The hub cap 4, since it was formed by press blanking from a metal plate, as shown in Figure 2, at its inner circumference part, a chamfer 43 of the cross-section circular arc is formed on the side where the punch penetrated, and a protruding part (sharp edge) 44 is formed due to thickness die wear or burrs at the side the punch pushed out.

And, as for the hub cap 4, the protruding part 44 is mated to the shaft 1 facing up, the inner circumference part 41 is caused to contact the inner ring 21 of the ball bearing 2 and in addition, its outer circumference is separated slightly from the inner circumference surface of the sleeve 3.

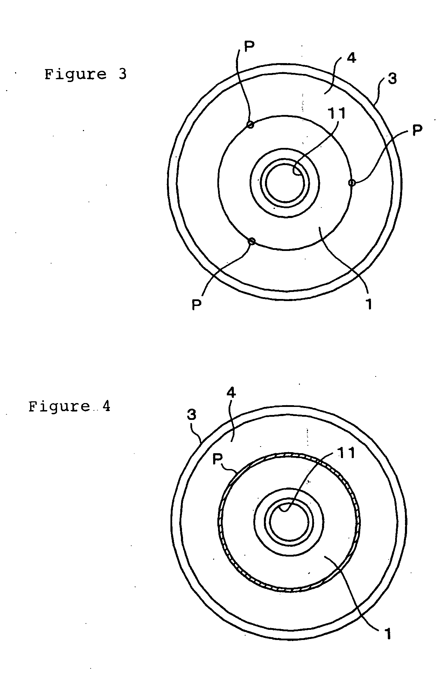

The hub cap 4 is fixed to the shaft 1 by laser welding the protruding part 44. In Figure 3 reference numeral P indicates a nugget due to welding, and, as shown in Figure 3, the hub cap 4 is spot welded to the shaft 1 at multiple places (3 places in this embodiment) at regular intervals in the circumferential direction. Furthermore, as shown in Figure 4, laser welding the entire circumference of the protruding part 44 of the hub cap 4 can also be done.

To the outer circumference of the pivot assembly of the above-mentioned configuration, the base of a swing arm provided with a magnetic head at the tip is attached. The swing arm is caused to move circularly centered on the pivot assembly by means of a drive mechanism such as a voice coil motor, and the magnetic head of the tip is caused to move along the surface of the hard disk.

The above-mentioned kind of pivot assembly is manufactured in the following way. First, an adhesive is applied to the outer circumference of the lower end of a shaft 1, and a ball bearing 2 is mated thereto. Meanwhile, an adhesive is applied to the outer circumference of the upper end of a sleeve 3, and a ball bearing 2 is mated thereto. And an adhesive is applied to the outer circumference of the upper end of a shaft 1 and the inner circumference of the lower end of a sleeve 3 and the sleeve 3 is mated to the shaft 1. Next, a hub cap 4 is mated to the upper end part of a shaft 1 and the end surface thereof is caused to contact the inner ring 21 of the ball bearing 2. And, the hub cap 4 is pressed and pre-load is applied.

The adhesive hardening method differs depending on the adhesive used, and in the case of a UV adhesive, ultraviolet rays are irradiated to the application part to cause hardening, and in the case of anaerobic adhesive, let stand, and in the case of epoxy system and the like thermo hardening adhesive, put into a heating oven heat and harden.

These adhesives have their respective characteristics and it is necessary to use them properly depending on the place of use, for example, because a UV adhesive is applicable to the extent that ultraviolet rays can be irradiated, gap bonding is unsuitable. On the other hand, anaerobic adhesive, if heated in order to harden, is reliable, but heating equipment and much trouble are required.

Generally, in the assembly of a pivot assembly, a UV anaerobic adhesive or a thermo-hardening adhesive are used, and, because of the aspects of reliability (bonding strength) and safety (out gas), most of the time a thermo-hardening adhesive is selected. in the case of a place where UV irradiation is possible after application of the adhesive, for example, the bonding of a shaft 1 and a ball bearing 2, anaerobic adhesive is effective for the bearing inner circumference part and the shaft mating part, the adhesive that has protruded at the time of mating can be hardened by UV irradiation (because the part that bulges out is exposed to the outside, UV irradiation is possible). Consequently, UV anaerobic adhesive that has both UV and anaerobic action is suitable. Furthermore, recently there is also the use of adhesives that have three actions, that is, UV anaerobic thermo-hardening adhesives. However, from the aspects of reliability of the bond and the reduction of out gas, a thermo-hardening type adhesive is suitable.

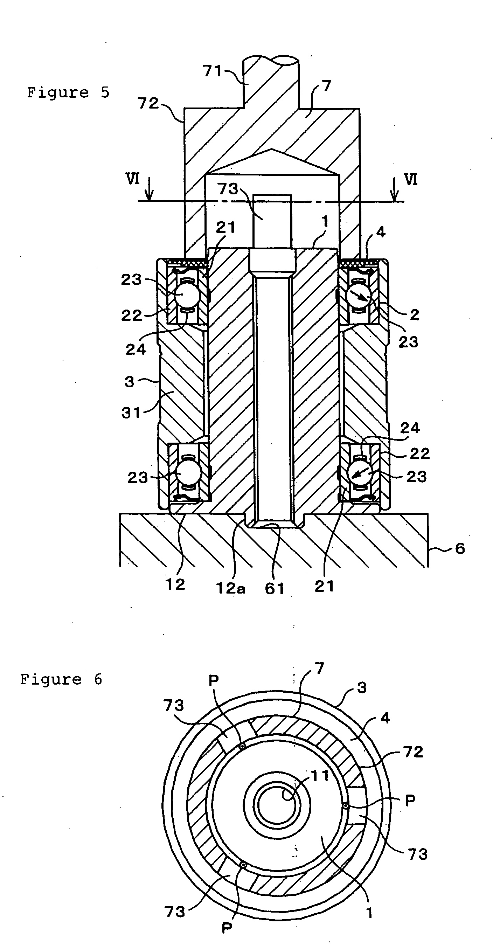

Figure 5 and Figure 6 are figures that show a device that sets the pre-load in a pivot assembly as mentioned above. Reference numeral 6 in these figures is a pad (support means). In the center part of the upper surface of the pad 6, a hole 61 that mates with the protruding part 12a formed in the center of the flange 12 of the pivot assembly is formed, and the pivot assembly is positioned by the protruding part 12a mating with this hole 61. Above the pad 6 a pressing piece (pressing pressure means) aligned with the axis line is disposed. The pressing piece 7 is composed of an axis 71 and a cylinder part 72 that forms a cylindrical shape, and on the cylinder part 72, for example, in the case of spot welding in three places, three grooves 73 that extend upwards from the lower end face are formed each separated 120 degrees in the circumferential direction. The pressing piece 7 is made movable in the up and down directions, and when descended presses on the hub cap 4 at a prescribed pressure. Obliquely above the pressing piece 7 a laser welding machine that is not illustrated is disposed. The pad 6 and pressing piece 7 can be intermittently rotated 120 degrees each time, and, when stopped, a groove 73 is arranged so as to face towards the laser welding machine.

When a pivot assembly is placed and held on the pad 6, the pressing piece 7 is caused to descend, and a pre-load is imparted facing downwards with respect to the inner ring 21, as is shown by the arrows in Figure 5. That force is sequentially transmitted by the balls 23, the outer ring 22, the spacer part 31 of the sleeve, the outer ring 22, and the inner ring 21, and this acts so that the inner ring 21 presses the outer ring 22 out towards the outside via the balls 23. By means of this, the play between the inner ring 21, the balls 23 and the outer ring 22 is eliminated and rotation precision can be obtained. This kind of pre-loaded state is maintained, and the protruding part 44 of the hub cap 4 is laser welded. At that time, the laser beam passes through the groove 73 of the pressing piece 7 and is irradiated to the protruding part 44. This spot welding is carried out at three places while the pad 6 and the pressing piece 7 are rotated 120 degrees each time. In this way, the hub cap 4 is fixed to the shaft 1, and the imparted pre-load is maintained in the ball bearing 2. Furthermore, after spot welding has been carried out as mentioned above, seam welding can also be carried out while causing the pressing piece 7 to descend, and rotating the pad 6 and the pressing piece 7.

Next, the pivot assembly is removed from the pad 6, the pivot assembly is put into a heating oven, and the adhesive is completely hardened. In the event that the adhesive used is a UV adhesive, it is put into a UV irradiating device and hardened by UV irradiation. By means of this, the shaft 1, ball bearing 2 and sleeve 3 are fixed together by means of an adhesive.

In the pivot assembly manufacturing method as mentioned above, because the hub cap 4 is fixed by laser welding to the outer circumference of the shaft 1, that the hub cap 4 can be reliably fixed is a matter of course, and the problem of out gas from the hub cap 4 can be solved. Particularly, the hub cap 4 approaches the disk assembly part of the hard disk drive the closest and, when this has been fixed by means of a adhesive the out gas generated from the adhesive is liable to directly exert an influence on the disk, but if based on laser welding without using a adhesive, that kind of problem can be solved once and for all. Furthermore, because the hub cap 4 is fixed to the shaft 1 and the pre-load is fixed, the pivot assembly can be provided to the final hardening treatment without using a jig. Consequently, the jig manufacturing expense and the work of attachment and removal with respect to the pivot assembly become unnecessary.

Furthermore, since the setting of the pre-load formerly carried out by means of a step such as bonding the inner ring to the shaft can be omitted due to the fixing of the seal member, the manufacturing man-days are further reduced and the manufacturing expense can be greatly reduced.

Particularly, in the above-mentioned first embodiment, because the hub cap 4 is mated to the shaft 1 so that the surface that faces the press blanking direction becomes the upper side, and is laser welded to the shaft at the protruding part 44 formed on the inner circumference part, a gap and a concave part do not exist between the hub cap 4 and the shaft 1, and a laser beam is appropriately irradiated. Furthermore, since the protruding part 44 is welded, an adherence strength the same as that of built-up welding can be obtained.

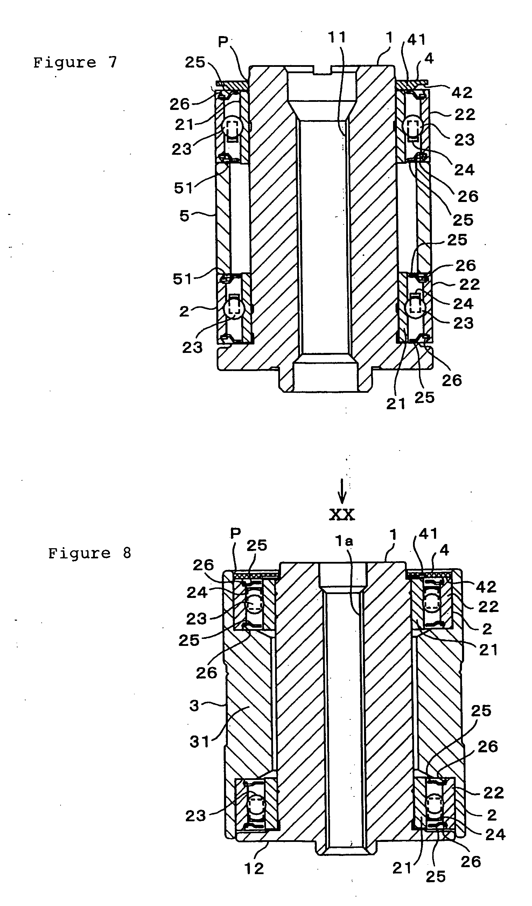

Next, the second embodiment of the present invention is explained with reference to Figure 7. The second embodiment differs from the first embodiment in the point that, instead of the sleeve 3 of the first embodiment, a spacer 5 is used. Accordingly, in the following explanation the same reference numerals are attached to the constituent elements that are equivalent to those of the above-mentioned first embodiment and the explanation thereof is omitted.

The spacer 5 is something that is a ring shape that has an outer diameter that is equal to that of the ball bearing 2 and so, it covers the gap of the outer rings 22 and, in addition, separates them at a regular interval. At the inner circumference side of the end face of the spacer 5 a convex line 51 that protrudes in the axial direction is formed, and by mating this convex line 51 with the concave part formed on the inner circumference side of the end face of the outer ring 22, both are positioned on concentric circles.

In this second embodiment also a hub cap 4 consists of an inner circumference part 41 and an outer circumference part 42 thinner than this inner circumference part 41, and the inner circumference part 41 is caused to contact an inner ring 21. Furthermore, the hub cap 4 is formed by press blanking from a metal plate, and in the inner circumference part thereof a chamfer equal to that shown in Figure 2 and a protruding part (sharp edge) are formed. And the hub cap 4, with the protruding part facing upwards, is mated with the shaft 1, and pre-load is imparted by means of the pre-load setting device shown in Figure 5 and Figure 6, and in that state, is fixed to the shaft by laser welding the protruding part. That laser welding is the spot welding shown in Figure 3 or the seam welding shown in Figure 4.

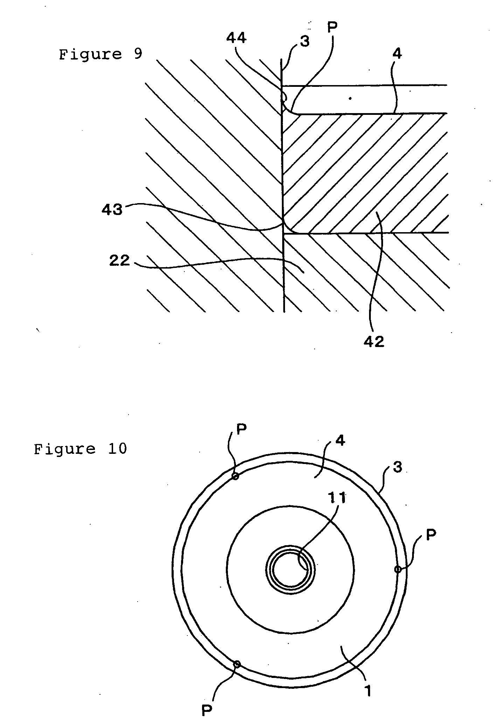

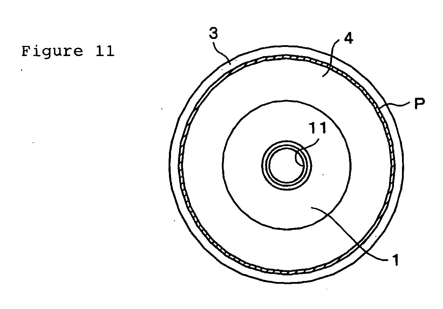

The third embodiment of the present invention is explained with reference to Figure 8 through Figure 11. This third embodiment differs from the first embodiment in the point that the hub cap 4 is laser welded to the inner circumference surface of the sleeve 3. The weld nugget P thereof is shown in Figure 10 and Figure 11. Furthermore, in the third embodiment, because the end face of the outer circumference part 42 of the hub cap 4 is caused to contact the outer ring 22, the outer circumference part 42 is formed thicker than the inner circumference part 41.

Also in this third embodiment, the hub cap 4 is formed by press blanking from a metal plate and on the outer circumference part thereof, as shown in Figure 9, a chamfer 43 and protruding part (sharp edge) 44 are formed. The hub cap 4 with the protruding part 44 facing upwards is mated to the sleeve 3, and the pivot assembly is placed and held on the pad 6 shown in Figure 5 and Figure 6. Furthermore, in this third embodiment, to impart a pre-load to the outer ring 22, a pressing piece 7 with a large outside diameter is used so as to press the outer circumference part of the hub cap 4. In order to allow a laser beam to pass through to the inner part of the pressing piece 7, grooves 73 are caused to extend up to the axis 71, and are formed in symmetrical positions with the axis line interposed between. Additionally, in the state in which a hub cap 4 has been pressed by the pressing piece 7, a laser beam passes through two grooves 73 in symmetrical positions and irradiates to the protruding part 44 of the outer circumference side of the hub cap 4, and the protruding part 44, by being laser welded, is fixed to the sleeve 3.

According to the present invention as explained above, because a seal member is fixed by laser welding to the outer circumference of a shaft or the inner circumference of a sleeve, there is no problem of out gas from the seal member. Furthermore, a pivot assembly can be supplied to the final hardening treatment without using a jig, the jig's manufacturing expense and the work that attaches and removes with respect to the pivot assembly becomes unnecessary, the manufacturing expense can be reduced and the like effects can be obtained.

In the foregoing description, the apparatus and method of the present invention have been described with reference to specific examples. It is to be understood and expected that variations in the principles of the apparatus and method herein disclosed may be made by one skilled in the art and it is intended that such modifications, changes, and substitutions are to be included within the scope of the present invention as set forth in the appended claims. The specification and drawings are accordingly to be regarded in an illustrative rather than in a restrictive sense.

## Claims

1. An apparatus for a pivot assembly, comprising:
a bearing assembly having at least one ball bearing disposed at each end of a shaft; and
a seal member, positioned to cover an outside end face of one of the at least one ball bearing, and welded to one of an outer circumference of the shaft and an inner circumference of a sleeve mated to the outer circumference of the ball bearing, wherein
a pre-load pressure is applied to one of an outer ring and an inner ring of the at least one ball bearing.

2. The apparatus according to claim 1, further comprising:
a means for supporting the bearing assembly;
a means for imparting pressure to the seal member, so that the seal member causes the pre-load pressure; and
a means for welding the seal member.

3. A method of manufacturing a pivot assembly, comprising the steps of:
mating a ball bearing at each end of a shaft;
disposing a sleeve on an inner ring, between an outer circumference of the ball bearing and one end of the shaft;
fixing a seal member to cover an outer end face of the ball bearing; imparting a pre-load pressure to the inner ring by pressure on the seal member; and
fixing the seal member to an outer circumference of the shaft.

4. The method according to claim 3, further comprising the steps of:
forming a sharp edge on an edge part of the seal member;
causing the sharp edge to stick closely at a point to one of the outer circumference of the shaft and the inner circumference of the sleeve; and
fixing the sharp edge at the point.

5. The method according to claim 3, further comprising the step of:
forming the seal member by press blanking; and
fixing by a welding means an edge part of the surface of the seal member that faces the press blanking to one of an outer circumference of the shaft and an inner circumference of the sleeve.

6. A method of manufacturing a pivot assembly, comprising the steps of:
mating a ball bearing at each end of a shaft;
disposing a spacer between an outer ring of the ball bearing and one end of the shaft;
fixing a seal member to cover an outer end face of the ball bearing; imparting a pre-load pressure to the inner ring by pressure on the seal member; and
fixing the seal member to an outer circumference of the shaft.

7. The method according to claim 6, further comprising the steps of:
forming a sharp edge on an edge part of the seal member;
causing the sharp edge to stick closely at a point to one of the outer circumference of the shaft and the inner circumference of the sleeve; and
fixing the sharp edge at the point.

8. The method according to claim 6, further comprising the step of:
forming the seal member by press blanking; and
fixing by a welding means an edge part of the surface of the seal member that faces the press blanking to one of an outer circumference of the shaft and an inner circumference of the sleeve.
